# EUROPÄISCHE PATENTANMELDUNG

(11) **EP 0 893 152 A1**
(43) Veröffentlichungstag der Anmeldung: **27.01.1999**
(21) Anmeldenummer: 98113482.8
(22) Anmeldetag: 20.07.1998
(51) Int. Cl.: B01D 53/02, B01J 20/16, B01J 20/30

(54) **Verfahren zur Abtrennung von Quecksilber aus Gasen, Adsorptionsmittel zur Durchführung des Verfahrens und Anwendung des Verfahrens**

(30) Priorität: 23.07.1997 DE 19731639
(71) Anmelder: Metallgesellschaft Aktiengesellschaft, 60325 Frankfurt am Main (DE)
(72) Erfinder: Herden, Hansjörg, 63110 Rodgau (DE); Albrecht, Johannes, Dr., 61206 Wöllstadt (DE); Schelhaas, Karl-Peter, Dr., 55288 Schornsheim (DE); Mayer-Schwinning, Gernot, 61352 Bad Homburg (DE); Hohmann, Volker, 63477 Maintal (DE)

(57) **Zusammenfassung**

Es wird ein Verfahren zur Abtrennung von metallischem Quecksilber aus reduzierend wirkenden Gasen und Gasgemischen, die außerdem H₂S, NH₃ , HCl und/oder Wasserdampf enthalten, durch Adsorption des Quecksilbers an einem Adsorptionsmittel beschrieben. Das Adsorptionsmittel besteht aus einem Gemisch natürlich vorkommender Zeolithe und enthält 1 bis 10 Gew.-% Ag, Cu, Sn, Pb, Zn und/oder Cd. Bei dem Verfahren wird das guecksilberhaltige Gas oberhalb seines Taupunkts mit dem Adsorptionsmittel bei einer Temperatur von 50 bis 150°C während einer Reaktionszeit von 0,5 bis 10 s zur Reaktion gebracht, und das mit Quecksilber beladene Adsorptionsmittel wird anschließend bei 350 bis 500°C regeneriert. Das Verfahren kann im Festbettreaktor, in der zirkulierenden Wirbelschicht oder im Flugstromreaktor durchgeführt werden und dient insbesondere der Quecksilberabtrennung aus Erdgas oder dem bei der Müllvergasung und Müllpyrolyse anfallenden Gasgemisch.

## Beschreibung

Die Erfindung bezieht sich auf ein Adsorptionsverfahren zur Abtrennung von metallischem Quecksilber, das nachfolgend auch als Hg(0) bezeichnet wird, aus Gasen. Die Erfindung bezieht sich ferner auf das Adsorptionsmittel zur Durchführung des Verfahrens sowie auf die Anwendung des Verfahrens.

Verschiedene Gase beziehungsweise Gasgemische enthalten dampfförmiges, metallisches Quecksilber als Verunreinigung. Der Gehalt an metallischem Quecksilber resultiert aus der Herkunft der Gase beziehungsweise Gasgemische. So hat Erdgas einen Gehalt an dampfförmigem, metallischem Quecksilber von 0,05 bis 500 µg/Nm³, und die bei der Müllverbrennung oder der Müllvergasung anfallenden Gasgemische haben einen Gehalt an dampfförmigem, metallischem Quecksilber von 100 bis 3000 µg/Nm³. Häufig sind die quecksilberhaltigen Gase und Gasgemische zusätzlich mit dampfförmigen organischen und anorganischen Quecksilberverbindungen verunreinigt. Die Abtrennung von Quecksilberverbindungen ist allerdings nicht Gegenstand der Erfindung. Metallisches Quecksilber ist schon bei Raumtemperatur merklich flüchtig, und daher können Gase und Gasgemische erhebliche Mengen an dampfförmigem, metallischem Quecksilber aufnehmen. Beispielsweise enthält mit Quecksilberdampf gesättigte Luft bei 0°C 0,002 g Hg(0)/m³, bei 20°C 0,014 g Kg(0)/m³ und bei 100°C 2,42 g Hg(0)/m³.

Zur Abtrennung von dampfförmigem, metallischem Quecksilber aus Gasen und Gasgemischen haben sich Adsorptionsverfahren bewährt, da sie auch die Entfernung kleiner Quecksilbermengen ermöglichen. Als Adsorptionsmittel werden insbesondere Aktivkohlen, kieselsäurehaltige Adsorbentien oder Zeolithe verwendet. Ferner ist bekannt, daS mit Kupfer, Silber oder Gold beschichete gebräuchliche Adsorptionsmittel metallisches Quecksilber aus Gasen und Gasgemischen abtrennen, wobei das Quecksilber in Form der Amalgame gebunden wird. Schließlich ist bekannt, daR auch Salze die Adsorption von metallischem Quecksilber begünstigen, wobei die Salze auf die gebräuchlichen Adsorptionsmittel durch Imprägnierung aufgebracht werden. Ausgehend von diesem allgemein bekannten Fachwissen wurde in der Vergangenheit eine Vielzahl spezieller Adsorptionsverfahren zur Abscheidung von metallischem Quecksilber aus Gasen und Gasgemischen vorgeschlagen.

Aus der DE-OS 2 227 532 ist ein Verfahren zur Abscheidung von Quecksilber aus Gasen, insbesondere aus elektrolytisch erzeugtem Wasserstoff oder mit Quecksilber verunreinigter Luft, bekannt, bei dem das mit Quecksilber verunreinigte Gas über ein poröses Material geleitet wird, das mit einer Lösung von Salzen des dreiwertigen Eisens getränkt ist. Als poröses Material werden insbesondere Silikagel, Aktivkohle, Tonerde, Silikate oder Metalloxide verwendet. Die Salze des dreiwertigen Eisens Sollen das metallische Quecksilber oxidieren, und die dabei gebildeten Quecksilbersalze sollen dann in der auf dem porösen Träger befindlichen Tränkungslösung gelöst und damit gebunden werden. Das bekannte Verfahren wird bei einer Temperatur von 0 bis 100°C sowie bei einem Druck > 1 bar durchgeführt.

Aus der DE-PS 2 841 565 ist ein Verfahren zur Reinigung von guecksilberhaltigen Gasen bekannt, bei dem das mit Quecksilber verunreinigte Gas mit modifizierten Zeolithen behandelt wird, die in der ionenausgetauschen Form neben den Übergangsmetallen Kupfer, Zink, Cadmium, Mangan und/oder Nickel 0,01 bis 5 Gew.-% Silber enthalten, wobei die Übergangsmetalle und das Silber in reduzierter Form vorliegen. Als Zeolith-Material können sowohl synthetische als auch natürliche Zeolithe verwendet werden. Bei diesem bekannten Verfahren muß das Adsorptionsmittel entweder mit Stickstoff bei 200°C oder mit Wasserstoff bei Temperaturen bis 350°C aktiviert werden, und das quecksilberhaltige Gas muß vor der adsorptiven Entfernung des Quecksilbers getrocknet werden. Das Verfahren arbeitet bei Raumtemperatur und kann zur Abtrennung von Quecksilber aus Wasserstoff, Stickstoff, Luft oder Methan verwendet werden.

Aus der DE-OS 4 302 166 ist bekannt, daS zur Abtrennung von Quecksilber aus den Abgasen der Abfallverbrennung mit Silber imprägnierte Zeolithe verwendet werden können und daß die mit Quecksilber beladenen Zeolithe zur Abtrennung des Quecksilbers auf 500 bis 900°C erhitzt sowie anschließend mit Salpetersäure getränkt und getrocknet werden. Die zur Quecksilberadsorption verwendeten Zeolithe enthalten 2 bis 20 Gew.-% Silbernitrat.

Die EP-PS 0 638 351 schlägt zur Entfernung von Quecksilber aus einem Wasserdampf und SO₂ enthaltenden Abgas ein Verfahren vor, bei dem das Abgas mit einer Temperatur von 20 bis 120°C über einen mit Schwefel oder einer Schwefelverbindung imprägnierten körnigen Zeolithen des Typs X oder Y geleitet wird und das Quecksilber in Form von HgS auf dem Zeolithträger gebunden wird. Als Zeolith wird ein hydrophober, dealuminierter Zeolith verwendet, der im Kristallgitter ein Atomverhältnis Silicium zu Aluminum von 20 : 1 bis 300 : 1 aufweist.

Aus der DE-OS 4 403 244 ist ein Verfahren zur Reinigung von sauerstoffhaltigen, bei der Verbrennung von Müll, Industrieabfällen und Klärschlamm anfallenden Abgasen bekannt, bei dem Quecksilber, Quecksilberverbindungen und polyhalogenierte Kohlenwasserstoffe durch Adsorption an Zeolithen aus den Abgasen entfernt werden. Bei diesem Verfahren ist vorgesehen, daß die Abgase oberhalb des Taupunkts bei einer Temperatur von 80 bis 180°C und einer Gasgeschwindigkeit von 3 bis 20 m/s mit einer Mischung aus natürlich vorkommenden Zeolithen während einer Reaktionszeit von 0,5 bis 10 s in einer Gas-Feststoff-Suspension zur Reaktion gebracht werden, wobei die mittlere Teilchengröße d₅₀ der Zeolith-Mischung 5 bis 50 µm und die mittlere Suspensionsdichte der Gas-Feststoff-Suspension 0,02 bis 10 kg Feststoff/Nm³ Abgas beträgt. Die Mischung aus natürlich vorkommenden Zeolithen beteht vorzugsweise aus 10 bis 20 Gew.-% Mordenit, 60 bis 70 Gew.-% Clinoptilolit, 0 bis 5 Gew.-% Montmorillonit und Rest SiO₂, wobei die aus natürlich vorkommenden Zeolithen bestehende Mischung mit 0,1 bis 1 Gew.-% MnSO₄, FeSO₄, CoSO₄, NiSO₄ und/oder CuSO₄ dotiert sein kann.

Schließlich ist aus der EP-PS 0 448 562 ein Verfahren zur gleichzeitigen Entfernung von Quecksilber und Wasser aus Erdgas bekannt, bei dem das Erdgas bei einer Temperatur von 0 bis 300°C über einen synthetischen Zeolithen des Typs A geleitet wird, der 0,001 bis 15 Gew.-% elementares Silber oder Gold enthält. Die Regenerierung des Zeolithen erfolgt bei einer Temperatur von 100 bis 600°C.

Bei der Abscheidung des metallischen Quecksilbers aus Gasen und Gasgemischen durch Adsorption an Zeolithen oder mit Edelmetallen beschichteten Zeolithen oder mit Salzen imprägnierten Zeolithen treten immer wieder Probleme auf, die insbesondere durch bestimmte Inhaltsstoffe der Gase und Gasgemische verursacht werden. So ist bekannt, daS Wasser, NH₃ , CO und Spuren von Kohlenwasserstoffen zumindest einen Teil der Adsorptionskapazität der Zeolithe, der mit Edelmetallen beschichteten Zeolithe oder der mit Salzen imprägnierten Zeolithe blockieren und damit der gewünschten Quecksilberadsorption entziehen. In der Praxis bedeutet dies, daß die auf 1 m³ Gas bezogene Menge des benötigten Adsorptionsmittels erhöht werden muß, was nicht nur zu einer Erhöhung der Betriebskosten, sondern auch zu einer Erhöhung der Investitionskosten führt. Daher schlägt z. B. die DE-PS 2 841 565 vor, das zu reinigende Gas vor dem Adsorptionsvorgang zu trocknen, und die EP-PS 0 448 562 macht aus der Not eine Tugend, indem sie die gleichzeitige Quecksilber- und Wasserabscheidung mit einem Zeolithen vorschlägt, der eine Edelmetallbeschichtung aufweist. Es ist ferner bekannt, daß H₂S, welches in vielen Gasen neben Quecksilber als Verunreinigung vorliegt, mit feinverteiltem Quecksilber unter Bildung von HgS reagiert, wodurch die Rückgewinnung des Quecksilbers durch thermische Regenerierung des Zeolithen behindert wird. H₂S kann aber auch die Edelmetallbeschichtung schädigen und damit die Bildung von Amalgamen behindern, denn beispielsweise reagiert H₂S mit feinverteiltem Silber unter Bildung von Ag₂S. Aus diesem Grund ist bei dem aus der DE-OS 4 302 166 bekannten Verfahren eine sehr hohe Regenerierungstemperatur von 500 bis 900°C vorgesehen. Schließlich müssen die mit Salzen imprägnierten Zeolithe zur Erzeugung der Edelmetallbeschichtung in einem gesonderten Arbeitsgang aktiviert werden, wie dies beispielsweise in der DE-PS 2 841 565 vorgeschlagen wird. Im übrigen kommt noch hinzu, daS die zur Abscheidung von metallischem Quecksilber verwendeten synthetischen Zeolithe relativ teuer sind.

Der Erfindung liegt die Aufgabe zugrunde, ein Verfahren zur adsorptiven Abtrennung von metallischem Quecksilber aus reduzierend wirkenden Gasen und Gasgemischen zu schaffen, das auch in Anwesenheit von H₂S, NH₃, KCl, CO und/oder Wasserdampf über einen längeren Zeitraum betriebssicher arbeitet und bei dessen Anwendung im Reingas Quecksilbergehalte < 50 µg/Nm³ zuverlässig eingehalten werden. Der Erfindung liegt ferner die Aufgabe zugrunde, ein Adsorptionsmittel zur Durchführung des Verfahrens zu schaffen, das eine hohe Beladungskapazität für metallisches Quecksilber aufweist und eine lange Standzeit hat. Das erfindungsgemäße Adsorptionsmittel soll sich insbesondere gegenüber NH₃ , Co, H₂S und HCl inert verhalten sowie möglichst geringe Mengen Wasser adsorbieren. Schließlich soll das erfindungsgemäße Adsorptionsmittel preiswert sein, damit die Reinigung großer, quecksilberhaltiger Gasmengen, die beispielsweise bei der Abfallverbrennung anfallen, wirtschaftlich durchgeführt werden kann.

Gelöst wird die der Erfindung zugrunde liegende Aufgabe durch ein Verfahren zur Abtrennung von Hg(0) aus reduzierend wirkenden Gasen und Gasgemischen, die außerdem H₂S, NH₃, HCl und/oder Wasserdampf enthalten, durch Adsorption des Hg(0) an einem Adsorptionsmittel, das aus einem Gemisch natürlich vorkommender Zeolithe besteht sowie 1 bis 10 Gew.-% Ag, Cu, Sn, Pb, Zn und/oder Cd enthält, bei dem das Hg(0)-haltige Gas oberhalb seines Taupunkts mit dem Adsorptionsmittel bei einer Temperatur von 50 bis 150°C während einer Reaktionszeit von 0,5 bis 10 s zur Reaktion gebracht wird und bei dem die Regenerierung des mit Hg(0) beladenen Adsorptionsmittels durch Erwärmung auf 350 bis 500°C erfolgt. Die mit dem erfindungsgemäßen Verfahren zu reinigenden, reduzierend wirkenden Gase und Gasgemische enthalten neben Wasserstoff, Kohlenwasserstoffen und/oder CO₂ auch CO, H₂S, HCl und/oder NH₃, wobei die reduzierende Wirkung auf dem Wasserstoff- und CO-Gehalt beruht. Diese Gase enthalten außerdem dampfförmiges Wasser, was zu einem Taupunkt von 10 bis 70°C führt. Bei der Durchführung des erfindungsgemäßen Verfahrens wurde festgestellt, daS weder CO noch H₂O vom Adsorptionsmittel in größerer Menge adsorbiert werden und daS eine Blockierung der auf dem Adsorptionsmittel befindlichen Metalle und Metallsalze, insbesondere durch Sulfid- und Chlorid-Bildung nicht eintritt. Es wurde ferner festgestellt, daß mit dem erfindungsgemäßen Verfahren im Reingas zuverlässig ein Quecksilbergehalt < 50 µg/Nm³ eingehalten werden kann, der in der Regel sogar < 10 µg/Nm³ ist. Das Adsorptionsmittel hat eine Beladungskapazität von 1 bis 5 Gew.-% Hg(0), wobei dieser Quecksilbergehalt durch die thermische Regenerierung nahezu guantitativ als metallisches Quecksilber zurückgewonnen werden kann und wobei das Adsorptionsmittel nach der Regenerierung ohne Minderung der Beladungskapazität vielfach wiederverwendbar ist.

Schließlich hat sich gezeigt, daß auch ein Teil der Quecksilberverbindungen, die in den Gasen und Gasgemischen vorhanden sind, adsorbiert werden.

Das erfindungsgemäße Verfahren kann besonders erfolgreich durchgeführt werden, wenn das Hg(0)-haltige Gas mit dem Adsorptionsmittel bei einer Temperatur von 80 bis 120°C zur Reaktion gebracht wird.

Nach der Erfindung ist vorgesehen, daß die Adsorptionsreaktion in einem Festbettreaktor durchgeführt wird, wobei das Adsorptionsmittel einen mittleren Teilchendurchmesser d₅₀ von 1 bis 8 mm hat und wobei die Reaktionszeit 1 bis 10 s und die Gasgeschwindigkeit 0,05 bis 0,5 m/s beträgt. Der Festbettreaktor eignet sich auch sehr gut zur Regenerierung des Adsorptionsmittels, das in Form einer Schüttung im Festbettreaktor angeordnet ist.

Alternativ ist nach der Erfindung vorgesehen, daß die Adsorptionsreaktion in einer zirkulierenden Wirbelschicht durchgeführt wird, wobei das Adsorptionsmittel einen mittleren Teilchendurchmesser d₅₀ von 10 bis 100 µm hat und wobei die Reaktionszeit 0,5 bis 5 s, die Gasgeschwindigkeit 3 bis 8 m/s und die mittlere Suspensionsdichte der Gas-Feststoff-Suspension 2 bis 10 kg Feststoff/Nm³ beträgt. Auch bei dieser Variante des erfindungsgemäßen Verfahrens wird die Regenerierung des Adsorptionsmittels in der zirkulierenden Wirbelschicht durchgeführt. Die zirkulierende Wirbelschicht ist als Zirkulationssystem gestaltet, das aus einem Reaktor, einem Feststoffabscheider und einer Feststoff-Rückführleitung besteht. Die zirkulierende Wirbelschicht zeichnet sich dadurch aus, daß - im Unterschied zur klassischen Wirbelschicht, bei der eine dichte Phase durch einen deutlichen Dichtesprung von dem darüber behindlichen Gasraum getrennt ist - Verteilungszustände ohne definierte Grenzschicht vorliegen. Ein Dichtesprung zwischen dichter Phase und darüber befindlichem Gasraum ist bei einer zirkulierenden Wirbelschicht nicht existent; jedoch nimmt innerhalb des Reaktors die Feststoffkonzentration von unten nach oben ständig ab. Die Betriebsbedingungen einer zirkulierenden Wirbelschicht sind bekanntlich über die Kennzahlen von Froude und Archimedes bestimmt.

Alternativ ist nach der Erfindung ferner vorgesehen, daß die Adsorptionsreaktion in einem Flugstromreaktor durchgeführt wird, wobei das Adsorptionsmittel einen mittleren Teilchendurchmesser d₅₀ von 10 bis 50 µm hat und wobei die Reaktionszeit 0,5 bis 8 s, die Gasgeschwindigkeit 7 bis 12 m/s und die mittlere Suspensionsdichte der Gas-Feststoff-Suspension 0,1 bis 3 kg Feststoff/Nm³ beträgt. Auch bei dieser Alternative des erfindungsgemäßen Verfahrens wird die Regenerierung des Adsorptionsmittels im Flugstromreaktor durchgeführt. Im Flugstromreaktor wird das Adsorptionsmittel zunächst in dem zu reinigenden Gasstrom suspendiert, die Gas-Feststoff-Suspension durchläuft dann entsprechend den Verfahrensbedingungen eine Reaktionsstrecke, und danach werden die Feststoffteilchen aus der Gas-Feststoff-Suspension durch Abscheidevorrichtungen, insbesondere durch einen oder mehrere Zyklone, Schlauchfilter und/oder Elektrofilter abgetrennt.

Nach der Erfindung ist es besonders vorteilhaft, wenn die Regenerierung des Adsorptionsmittels in einem Inertgasstrom erfolgt und wenn das Hg(0) aus dem Inertgasstrom bei einer Temperatur von -17 bis +20°C auskondensiert wird. Durch den Inertgasstrom wird vermieden, daS es bei der Regenerierung des Adsorptionsmittels zur Oxidation des metallischen Quecksilbers kommt. Als Inertgas wird insbesondere Stickstoff verwendet. Das Inertgas kann sowohl bei der im Festbettreaktor, als auch bei der in der zirkulierenden Wirbelschicht, als auch bei der im Flugstromreaktor durchgeführten Regenerierung des Adsorptionsmittels eingesetzt werden. Die Kondensationstemperatur von -17 bis +20°C kann durch relativ einfache technische Mittel bereitgestellt werden. Bei der erfindungsgemäßen Regenerierung fällt nahezu die gesamte aus den Gasen abgeschiedene Quecksilbermenge als flüssiges, metallisches Quecksilber an.

Die der Erfindung zugrunde liegende Aufgabe wird ferner durch die Schaffung eines Adsorptionsmittels zur Durchführung des Verfahrens gelöst, das aus einem Gemisch natürlich vorkommender Zeolithe besteht und 1 bis 10 Gew.-% Ag, Cu, Sn, Pb, Zn und/oder Cd enthält, wobei die Metalle in Form ihrer Kationen durch Ionenaustausch in das Zeolith-Gemisch eingebracht sind. Zur Herstellung des Adsorptionsmittels wird das aus natürlichen Zeolithen bestehende Gemisch unter Rühren bei Normaltemperatur mit einer wäßrigen Lösung der löslichen Nitrate, Sulfate oder Chloride des Ag, Cu, Sn, Pb, Zn und/oder des Cd behandelt, wobei die in den Zeolithen enthaltenen Kationen Na⁺ und Ca²⁺ gegen die Kationen der vorgenannten Metalle ausgetauscht werden. Anschließend wird die behandelte Zeolith-Mischung mit Wasser gewaschen, wobei die ausgetauschten Kationen sowie die mit den Salzen der vorgenannten Metalle eingebrachten Anionen aus der Zeolith-Mischung entfernt werden. Schließlich wird die gewaschene Zeolith-Mischung getrocknet. Nach der Erfindung ist vorgesehen, daS auf diese Weise 1 bis 10 Gew.-% der vorgenannten Kationen in die Zeolith-Mischung eingebracht werden, wobei sich ein Kationengehalt von insgesamt 2 bis 5 Gew.-% besonders bewährt hat. Das so hergestellte Adsorptionsmittel wird direkt zur Durchführung des erfindungsgemäßen Verfahrens verwendet, wobei ein gesonderter Arbeitsgang zur Aktivierung des Adsorptionsmittels nicht erforderlich ist. Zu Beginn der erfindungsgemäßen Quecksilberadsorption bildet sich in der reduzierend wirkenden Gasatmosphäre eine hinreichende Menge an aktiven Zentren, welche die Abscheidung des Quecksilbers bewirken bzw. begünstigen. Neben den durch Reduktion erzeugten, Amalgame bildenden Metallen liegen auch die entsprechenden Kationen dieser Metalle in den aktiven Zentren vor. Das erfindungsgemäße Adsorptionsmittel kann beispielsweise in einem Festbettreaktor ca. 300 Stunden mit Quecksilber beladen werden, ohne daß die Adsorptionsleistung des Adsorptionsmittels sinkt. Nach der anschließenden Regenerierung des Adsorptionsmittels sind mindestens 20 weitere Beladungszyklen mit dem gleichen Adsorptionsmittel möglich, so daß insgesamt eine Standzeit von mindestens 6000 Stunden erreicht wird. Im Vergleich zu den mit Edelmetallen beschichteten synthetischen Zeolithen werden für das erfindungsgemäße Adsorptionsmittel nur ca. 10 % der Investitionskosten benötigt.

Nach der Erfindung hat es sich als besonders vorteilhaft erwiesen, wenn das Gemisch aus natürlich vorkommenden Zeolithen aus 10 bis 90 Gew.-% Mordenit, 5 bis 70 Gew.-% Clinoptilolit, 0 bis 5 Gew.-% Montmorillonit und Rest SiO₂ besteht. Dieses Zeolith-Gemisch adsorbiert weder CO noch niedere Kohlenwasserstoffe mit 1 bis 8 C-Atomen, und es adsorbiert außerdem nur eine geringe Menge Wasser. Die auf dieses Zeolith-Gemisch entsprechend der Erfindung aufgebrachten Kationen werden in reduzierenden Gasen bei einer Temperatur von 50 bis 150°C sehr schnell zumindest teilweise zu den entsprechenden Metallen reduziert.

Nach der Erfindung werden für Quecksilber sehr gute Abscheideleistungen erzielt, wenn das Adsorptionsmittel 2 bis 5 Gew.-% Ag enthält.

Schließlich ist nach der Erfindung vorgesehen, daß das Verfahren zur Abtrennung von Hg(0) aus Erdgas oder dem bei der Müllvergasung und Müllpyrolyse anfallenden Gasgemisch angewendet wird. Erdgas enthält als Hauptbestandteile gasförmige Kohlenwasserstoffe mit 1 bis 4 C-Atomen. Daneben sind im Erdgas H₂ , CO₂ und H₂O in unterschiedlicher Menge enthalten. Häufig ist Erdgas durch H₂S und Quecksilber verunreinigt, wobei der Quecksilbergehalt zwischen 0,05 und 500 µg/Nm³ liegt. Es hat sich gezeigt, daß metallisches Quecksilber aus Erdgas nach dem erfindungsgemäßen Verfahren vorteilhaft abgetrennt werden kann. Bei der Müllvergasung werden die im Müll enthaltenen Kohlenstoffverbindungen in Anwesenheit von Sauerstoff teilweise pyrolysiert, gecrackt und verbrannt. Als Produkt der Müllvergasung entsteht ein Gasgemisch, das in der Regel bis zu 2 % Sauerstoff, 1 bis 5 % CO, 5 bis 20 % H₂, 10 bis 8000 mg HCl/Nm³, 0,05 bis 1 % H₂S, 500 bis 5000 mg NH₃/Nm³ 100 bis 5000 mg Kohlenwasserstoffe/Nm³ und bis zu 20 % CO₂ enthält (% = Vol.-%). Die durch Müllvergasung erzeugten Gasgemische sind in der Regel mit Wasserdampf gesättigt, und in ihnen liegt das Quecksilber zum weitaus überwiegenden Teil in metallischer Form vor. Die bei der Müllpyrolyse anfallenden Gasgemische enthalten keinen Sauerstoff, und ihr Gehalt an Kohlenwasserstoffen ist höher als bei den durch Müllvergasung erzeugten Gasgemischen, während der Wasserstoffgehalt der durch Müllpyrolyse erzeugten Gasgemische niedriger ist als der Waserstoffgehalt der durch Müllvergasung erzeugten Gasgemische. Auch in den Gasgemischen der Müllpyrolyse liegt das Quecksilber zum weitaus überwiegenden Teil in metallischer Form vor. Das erfindungsgemäße Verfahren eignet sich sehr gut zur Abtrennung des metallischen Quecksilbers aus den Gasgemischen, die bei der Müllvergasung und der Müllpyrolyse erzeugt werden, da diese Gasgemische reduzierend wirken, obwohl sie teilweise einen geringen Sauerstoffgehalt aufweisen.

Der Gegenstand der Erfindung wird nachfolgend anhand von zwei Ausführungsbeispielen näher erläutert.

### Ausführungsbeispiel 1:

Durch Müllvergasung wurde ein Gasgemisch erzeugt, das 17 % H₂, 0,9% H₂S, 3 % CO, 0,1 % HCl, 1 % O₂ und 78 % N₂ enthielt (% = Vol.-%). Dieses Gasgemisch hatte einen Taupunkt von 70°C und enthielt 600 bis 900 µg Hg(0)/Nm³. Das aus der Vergasung kommende, heiße, staubhaltige Gasgemisch wurde zunächst auf ca. 120°C abgekühlt und danach entstaubt. Das entstaubte Gasgemisch hatte noch eine Temperatur von ca. 100°C. Es wurde dann mit einer Geschwindigkeit von 0,12 m/s einem Festbettreaktor zugeführt, wobei die mittlere Verweilzeit des Gasgemisches im Festbettreaktor 3 s betrug.

Im Festbettreaktor befand sich das Adsorptionsmittel, das einen mittleren Teilchendurchmesser d₅₀ von 3 mm hatte, das aus ca. 70 Gew.-% Mordenit, ca. 20 Gew.-% Clinoptilolit, ca. 5 Gew.-% Montmorillonit und Rest SiO₂ bestand und das 2,3 Gew.-% Ag enthielt. Dem Festbettreaktor wurde das quecksilberhaltige Gasgemisch während 250 Stunden zugeführt. Nach dieser Zeit hatte das Adsorptionsmittel einen Quecksilbergehalt von 1,3 Gew.-%. Das den Festbettreaktor verlassende Reingas hatte während der gesamten Betriebszeit des Festbettreaktors einen Quecksilbergehalt < 10 µg/Nm³. Nach der Abtrennung des metallischen Quecksilbers wurden aus dem Gasgemisch H₂S und HCl nach bekannten Verfahren abgetrennt.

Das mit Quecksilber beladene Adsorptionsmittel wurde nach 250 Betriebsstunden regeneriert, wobei dem Festbettreaktor ein auf 400 bis 450°C erhitzter Stickstoffstrom zugeführt wurde. Der Stickstoffstrom wurde anschließend auf -17°C gekühlt, wobei das metallische Quecksilber in flüssiger Form anfiel. Es wurden ca. 95 % des adsorbierten Quecksilbers in metallischer, flüssiger Form zurückgewonnen. Nach der Regenerierung wurde das Adsorptionsmittel erneut zur Quecksilberabscheidung verwendet.

### Ausführungsbeispiel 2:

Das gemäß Beispiel 1 durch Müllvergasung erzeugte, staubhaltige Gasgemisch wurde auf ca. 100°C abgekühlt und dann mit einer Geschwindigkeit von 9 m/s einem Flugstromreaktor zugeführt. Beim Eintritt des Gasgemisches in den Flugstromreaktor wurde im Gasstrom das Adsorptionsmittel suspendiert, das die im Beispiel 1 angegebene Zusammensetzung hatte und einen mittleren Teilchendurchmesser d₅₀ von ca. 20 µm aufwies. Im Flugstromreaktor hatte die Gas-Feststoff-Suspension eine Verweilzeit von 6 s und eine Suspensionsdichte von 1 kg Feststoff/Nm³. Aus der Gas-Feststoff-Suspension wurde der Feststoff an einem Schlauchfilter abgetrennt, das dem Flugstromreaktor nachgeschaltet war. Der im Schlauchfilter abgeschiedene Feststoff wurde in den Flugstromreaktor zurückgeführt. Der Flugstromreaktor und das Schlauchfilter wurden bei ca. 100°C betrieben. Nach einer Betriebszeit von 400 h hatte das Adsorptionsmittel einen Quecksilbergehalt von 2 Gew.%. Das aus dem Schlauchfilter austretende Reingas hatte während der gesamten Betriebszeit einen Quecksilbergehalt < 10 µg/Nm³ . Aus dem Reingas wurden H₂S und HCl nach bekannten Verfahren abgetrennt.

Nach der Betriebszeit von 400 h wurde das mit Quecksilber beladene Adsorptionsmittel bei 400 bis 450 °C im Flugstromreaktor regeneriert, wobei ein Stickstoffstrom verwendet wurde. Nach dem Verlassen des Flugstromreaktors wurde der mit Quecksilber, Staub und dem Adsorptionsmittel beladene, heiße Stickstoffstrom zuerst einem Zyklon zugeführt. Das im Zyklon abgeschiedene Adsorptionsmittel wurde erneut zur Quecksilberabscheidung im Flugstromreaktor verwendet. Der Staub wurde aus dem heißen Stickstoffstrom anschließend an einem gepulsten Kerzenfilter abgeschieden, das aus einem keramischen Faservlies bestand. Der Staub wurde als Sondermüll entsorgt. Der aus dem Kerzenfilter austretende, heiße Stickstoffstrom wurde auf -17°C abgekühlt, wobei das metallische Quecksilber in flüssiger Form anfiel. Es wurden ca. 93% des adsorbierten Qucksilbers in flüssiger, metallischer Form zurückgewonnen.

Der Begriff Nm³ wird für 1 m³ eines Gases verwendet, das Normalbedingungen, also 1 bar und 0°C, aufweist.

## Patentansprüche

1. Verfahren zur Abtrennung von Hg(0) aus reduzierend wirkenden Gasen und Gasgemischen, die außerdem H₂S, NH₃, HCl und/oder Wasserdampf enthalten, durch Adsorption des Hg(0) an einem Adsorptionsmittel, das aus einem Gemisch natürlich vorkommender Zeolithe besteht sowie 1 bis 10 Gew.-% Ag, Cu, Sn, Pb, Zn und/oder Cd enthält, bei dem das Hg(0)-haltige Gas oberhalb seines Taupunkts mit dem Adsorptionsmittel bei einer Temperatur von 50 bis 150°C während einer Reaktionszeit von 0,5 bis 10 s zur Reaktion gebracht wird und bei dem die Regenerierung des mit Hg(0) beladenen Adsorptionsmittels durch Erwärmung auf 350 bis 500°C erfolgt.

2. Verfahren nach Anspruch 1, bei dem das Hg(0)-haltige Gas mit dem Adsorptionsmittel bei einer Temperatur von 80 bis 120°C zur Reaktion gebracht wird.

3. Verfahren nach den Ansprüchen 1 bis 2, bei dem die Reaktion in einem Festbettreaktor durchgeführt wird, wobei das Adsorptionsmittel einen mittleren Teilchendurchmesser d₅₀ von 1 bis 8 mm hat und wobei die Reaktionszeit 1 bis 10 s und die Gasgeschwindigkeit 0,05 bis 0,5 m/s beträgt.

4. Verfahren nach den Ansprüchen 1 bis 2, bei dem die Reaktion in einer zirkulierenden Wirbelschicht durchgeführt wird, wobei das Adsorptionsmittel einen mittleren Teilchendurchmesser d₅₀ von 10 bis 100 µm hat und wobei die Reaktionszeit 0,5 bis 5 s, die Gasgeschwindigkeit 3 bis 8 m/s und die mittlere Suspensionsdichte der Gas-Feststoff-Suspension 2 bis 10 kg Feststoff/Nm³ beträgt.

5. Verfahren nach den Ansprüchen 1 bis 2, bei dem die Reaktion in einem Flugstromreaktor durchgeführt wird, wobei das Adsorptionsmittel einen mittleren Teilchendurchmesser d₅₀ von 10 bis 50 µm hat und wobei die Reaktionszeit 0,5 bis 8 s, die Gasgeschwindigkeit 7 bis 12 m/s und die mittlere Suspensionsdichte der Gas-Feststoff-Suspension 0,1 bis 3 kg Feststoff/Nm³ beträgt.

6. Verfahren nach den Ansprüchen 1 bis 5, bei dem die Regenerierung des Adsorptionsmittels in einem Inertgasstrom erfolgt und bei dem das Hg(0) aus dem Inertgasstrom bei einer Temperatur von -17 bis +20°C auskondensiert wird.

7. Adsorptionsmittel zur Durchführung des Verfahrens nach den Ansprüchen 1 bis 6, das aus einem Gemisch natürlich vorkommender Zeolithe besteht und 1 bis 10 Gew.-% Ag, Cu, Sn, Pb, Zn und/oder Cd enthält, wobei die Metalle in Form ihrer Kationen durch Ionenaustausch in das Zeolith-Gemisch eingebracht sind.

8. Adsorptionsmittel nach Anspruch 7, bei dem das Zeolith-Gemisch aus 10 bis 90 Gew.-% Mordenit, 5 bis 70 Gew.-% Clinoptilolit, 0 bis 5 Gew.-% Montmorillonit und Rest SiO₂ besteht.

9. Adsorptionsmittel nach den Ansprüchen 7 bis 8, das 2 bis 5 Gew.-% Ag enthält.

10. Anwendung des Verfahrens nach den Ansprüchen 1 bis 6 zur Abtrennung von Hg(0) aus Erdgas oder dem bei der Müllvergasung und Müllpyrolyse anfallenden Gasgemisch.
